# EUROPEAN PATENT SPECIFICATION

(11) **EP 1 179 494 B1**
(45) Date of publication and mention of the grant of the patent: **16.04.2008**
(21) Application number: 01306651.9
(22) Date of filing: 03.08.2001
(51) Int. Cl.: B65G 47/244

(54) **Alignment of articles**
Ausrichten von Gegenständen
Alignement d'articles

(30) Priority: 08.08.2000 GB 0195107
(43) Date of publication of application: 13.02.2002
(73) Proprietor: ISHIDA CO., Ltd., Kyoto 606-8392 (JP)
(72) Inventor: Timings, Bernard Austin, Rugby, Warwickshire (GB)
(74) Representative: Stuart, Ian Alexander

(56) References cited:
- EP-A- 0 341 811
- GB-A- 1 199 014
- GB-A- 2 329 884
- NL-A- 9 300 313
- US-A- 4 967 899

## Description

The present invention relates to an apparatus and method for use in the alignment of articles, e.g. in packaging processes. It is mainly concerned with lightweight articles which are generally rectangular in plan, e.g. packets of snack foods. In the manufacture and packaging of such articles, much use is made of high speed conveyors and processing equipment. However, the equipment for handling packages often relies on them being properly aligned. The present invention provides an economical system for improving the degree of alignment of conveyed articles.

GB 2 329 884 and US 4 967 899 disclose apparatuses for rotating relatively large and heavy articles. GB 2 329 884 uses a pair of rotary devices for engaging a product on opposite sides. US 4 967 899 used a rotary device to kick a product at one side and more it onto a second conveyor.

In a first aspect, the invention provides an alignment system according to the subject of claim 1.

The displacement means of the aligning device may be a rotary element from which the at least one projection projects. Thus it may employ a rotatable wheel (or annulus) having projections projecting parallel to the axis of rotation. The rotary element is mounted adjacent the conveying path so that its rotation causes the projections to sweep round and pass adjacent the conveying path, so that they travel in the conveying direction, somewhat faster than the conveying speed. The rotary disk or annulus may be horizontal or may be tilted slightly upwardly in the conveying direction.

Another form of rotary device could have an axis of rotation extending generally transversely to the conveying path, with radially extending projections. Alternatively it could be in the form of a short endless belt with projections, a run of the belt extending adjacent the conveying path.

The projections desirably have some flexibility, to reduce the risk of damaging the articles and/or to reduce the risk of injury to personnel. Thus they may consist of resilient elements, e.g. involving coil springs or elongate resilient bodies, e.g. of rubber. Alternatively they may be relatively flexible, e.g. strips of flexible plastic material as used for drive-through doors.

The conveying means may be a vibratory bowl conveyor or a linear conveyor, e.g. a belt or chain conveyor. be a plurality of aligning devices. Thus if there are two such devices and each of them has an 80% success rate in correcting alignment, 96% of misaligned articles will be corrected.

In a second aspect the invention provides a method of aligning articles, using an alignment system according to the first aspect. This is operated so that the at least one projection is displaced parallel to the conveying direction, at somewhat more than the conveying speed.

In a third aspect, the invention provides an aligning device for use in an aligning system or method according to the first or second aspect.

An embodiment of the invention will now be described in more detail with reference to the accompanying drawings, in which:
Fig. 1 is a top plan view of a vibratory bowl conveyor assembly including an aligning device embodying the invention; and
Fig. 2 is a side elevation of part of the assembly shown in Fig. 1.

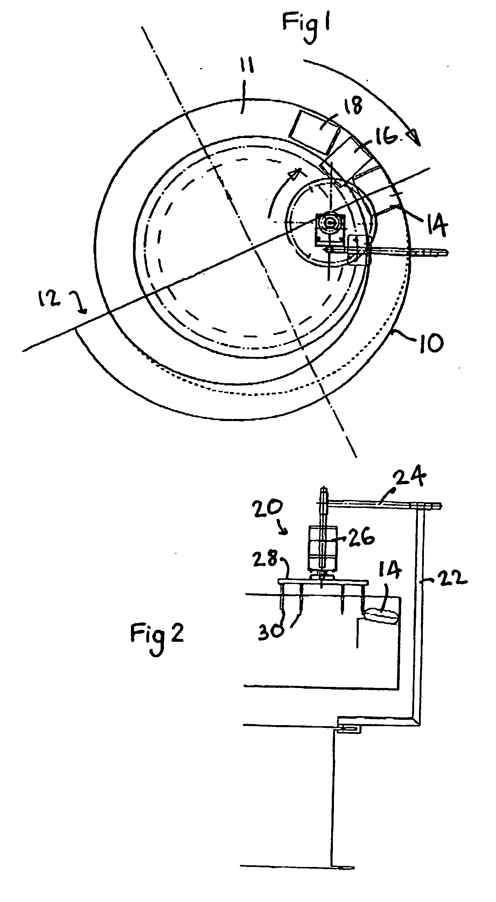

The bowl conveyor 10 is a large generally cylindrical bowl having a spiral track extending from its base, around the inside of the cylindrical wall, to an outlet region 12. The bowl is mounted on a stand and arranged to be driven by a motor with a vibratory motion such that articles placed in the bowl are induced to travel up the spiral path, and out of the outlet region 12. Fig. 1 shows three articles 14,16,18. These are rectangular in plan and may be, for example, bags of crisps. The path defined by the track 11 has a width which is slightly greater than the width of the articles. Thus properly aligned articles such as the first and last articles 14,18 shown in Fig. 1 travel along the path, fully on it. However, a misaligned article such as the central article 16 projects laterally off the path.

An aligning device 20 is provided at one region of the bowl conveyor 10. It is mounted by means of a stand 22 and arm 24. The arm supports a motor 26 with a substantially vertical axis. At the bottom end, the motor 26 is rotationally fast with a circular disc 28 whose lower face has an annular array of equally spaced projections 30 (six in this example). The projections are elongate and resilient. In this example, they consist of spring elements as used for door stops. The aligning device is mounted so that the path of the projections 30, when the disc 28 rotates, carries them adjacent the path 11. As can be seen in Fig. 2, a correctly aligned packet 14 is not contacted by a projection 30. However a misaligned packet such as the packet 16 projects into the path of the projections 30. The rate of rotation of the motor is such that the disc conveys the projections 30 at a higher speed than the packets 14,16,18 are conveyed along the conveyor. Thus as the misaligned packet 16 is passing the aligning device 20, it will be contacted by at least one of the projections 30, which will tend to rotate it, to improve its alignment.

The motor 26 and disc 28 may be tilted slightly so that the projections 30 rise slightly as they pass adjacent the conveying path.

## Claims

1. An alignment system comprising means (10) for conveying articles (14, 16, 18) along a predetermined path (11), the articles having a desired direction of alignment relative to the conveying direction; a barrier at one side of the conveying path so that an article (16) when properly aligned is conveyed undisturbed along said path, and when misaligned, said article projects laterally of the conveying path on the opposite side from said barrier; and an aligning device (20) having at least one projection (30) and means (26, 28) for displacing said at least one projection (30) cyclically so that it travels adjacent the conveying path (11) at said opposite side for contacting a misaligned article (16) and rotating it to reduce misalignment.

2. An alignment system according to claim 1 wherein the displacement means (26, 28) of the aligning device comprises a rotary element (28) from which the at least one projection (30) projects.

3. An alignment system according to claim 2 wherein the rotary element (28) is a rotatable wheel or annulus from which said at least one projection (30) projects parallel to the axis of rotation, and wherein said rotary element (28) is mounted adjacent the conveying path so that its rotation causes the projection(s) to sweep round and pass adjacent the conveying path (11), travelling in the conveying direction.

4. An alignment system according to claim 2 wherein the rotary element has an axis of rotation extending generally transversely to the conveying path (11), with said at least one projection extending radially.

5. An alignment system according to claim 1 wherein said displacement means is provided by an endless belt, a run of the belt extending adjacent the conveying path (11).

6. An alignment system according to any preceding claim wherein the conveying means is a vibratory bowl conveyor (10).

7. An alignment system according to any preceding claim having a plurality of aligning devices (20) spaced along the conveying path (11).

8. A method for aligning articles (14, 16, 18) comprising conveying articles along a predetermined path (11), the articles having a desired direction of alignment relative to the conveying direction said path being slightly greater than the width of the aligned articles, there being a barrier at one side of the path (11) and the arrangement being so that a misaligned article (16) projects laterally of the conveying path (11) on the opposite side from said barrier; providing an aligning device (20) having at least one projection (30); and displacing said at least one projection (30) cyclically so that it travels adjacent the conveying path (11) so at to contact a misaligned article (16) and rotate it to reduce misalignment.

9. A method of aligning according to claim 8 wherein the at least one projection (30) is displaced parallel to the conveying direction, at a speed greater than the conveying speed.

## Patentansprüche

1. Ausrichtungssystem, umfassend ein Mittel (10) zum Befördern von Artikeln (14, 16, 18) entlang einer vorbestimmten Strecke (11), wobei die Artikel eine gewünschte Ausrichtungsrichtung relativ zur Beförderungsrichtung aufweisen, eine Barriere an einer Seite der Förderstrecke, so dass ein Artikel (16), wenn richtig ausgerichtet, ohne Behinderungen entlang der Strecke befördert wird, und der Artikel, wenn fehlerhaft ausgerichtet, seitlich der Förderstrecke auf der gegenüberliegenden Seite der Barriere vorsteht, und eine Ausrichtungsvorrichtung (20), welche zumindest einen Vorsprung (30) sowie ein Mittel (26, 28) zum periodischen Verschieben des zumindest einen Vorsprungs (30) aufweist, so dass sich dieser an die Förderstrecke (11) angrenzend an der gegenüberliegenden Seite entlangbewegt, um einen fehl ausgerichteten Artikel (16) zu berühren und ihn zur Verringerung der Fehlausrichtung zu drehen.

2. Ausrichtungssystem nach Anspruch 1, worin das Verschiebungsmittel (26, 28) der Ausrichtungsvorrichtung ein Drehelement (28) umfasst, von dem der zumindest eine Vorsprung (30) vorsteht.

3. Ausrichtungssystem nach Anspruch 2, worin das Drehelement (28) ein drehbares Rad oder ein drehbarer Ring ist, von dem der zumindest eine Vorsprung (30) parallel zur Drehachse vorsteht, und worin das Drehelement (28) derart an die Förderstrecke angrenzend angebracht ist, dass dessen Drehung das Umlaufen und das an die Förderstrecke (11) angrenzende Vorbeifahren des Vorsprungs oder der Vorsprünge bewirkt, welche(r) sich in Beförderungsrichtung bewegt bzw. bewegen.

4. Ausrichtungssystem nach Anspruch 2, worin das Drehelement eine Drehachse aufweist, die sich im Allgemeinen quer zur Förderstrecke (11) erstreckt, wobei sich der zumindest eine Vorsprung radial erstreckt.

5. Ausrichtungssystem nach Anspruch 1, worin das Verschiebungsmittel von einem endlosen Band bereitgestellt ist, wobei sich ein Lauf des Bandes an die Förderstrecke (11) angrenzend erstreckt.

6. Ausrichtungssystem nach einem der vorangegangenen Ansprüche, worin das Beförderungsmittel ein Schwingschalenförderer (10) ist.

7. Ausrichtungssystem nach einem der vorangegangenen Ansprüche, welches eine Vielzahl an Ausrichtungsvorrichtungen (20) aufweist, die entlang der Förderstrecke voneinander beabstandet sind.

8. Verfahren zum Ausrichten von Artikeln (14, 16, 18), umfassend das Befördern von Artikeln entlang einer vorbestimmten Strecke (11), wobei die Artikel eine gewünschte Ausrichtungsrichtung relativ zur Beförderungsrichtung aufweisen, wobei die Strecke etwas breiter als die Breite der ausgerichteten Artikel ist, eine Barriere an einer Seite der Strecke (11) ausgebildet ist und die Anordnung derart ist, dass ein fehl ausgerichteter Artikel (16) seitlich der Förderstrecke auf der gegenüberliegenden Seite der Barriere vorsteht, sowie eine Ausrichtungsvorrichtung (20) mit zumindest einem Vorsprung (30) bereitstellt und den zumindest einen Vorsprung (30) so periodisch verschiebt, dass sich dieser an die Förderstrecke (11) angrenzend bewegt, um einen fehl ausgerichteten Artikel (16) zu berühren und diesen zur Verringerung der Fehlausrichtung zu drehen.

9. Ausrichtungsverfahren nach Anspruch 8, worin der zumindest eine Vorsprung (30) parallel zur Beförderungsrichtung mit einer Geschwindigkeit größer als die Beförderungsgeschwindigkeit verschoben wird.

## Revendications

1. Système d'alignement comprenant des moyens (10) pour transporter des articles (14, 16, 18) le long d'un trajet prédéterminé (11), les articles ayant une direction d'alignement souhaitée par rapport à la direction de transport ; une barrière à un côté du trajet de transport de sorte qu'un article (16), lorsqu'il est correctement aligné, soit transporté non perturbé le long dudit trajet, et, lorsqu'il est désaligné, fasse saillie latéralement par rapport au trajet de transport du côté opposé à ladite barrière ; et un dispositif d'alignement (20) ayant au moins une saillie (30) et des moyens (26, 28) pour déplacer ladite au moins une saillie (30) cycliquement de sorte qu'elle se déplace à proximité du trajet de transport (11) audit côté opposé pour entrer en contact avec un article désaligné (16) et faire tourner celui-ci pour réduire le désalignement.

2. Système d'alignement selon la revendication 1 dans lequel les moyens de déplacement (26, 28) du dispositif d'alignement comprennent un élément rotatif (28) depuis lequel la au moins une saillie (30) fait saillie.

3. Système d'alignement selon la revendication 2 dans lequel l'élément rotatif (28) est une roue ou anneau rotatif depuis lequel au moins une saillie (30) fait saillie parallèlement à l'axe de rotation, et dans lequel ledit élément rotatif (28) est monté à proximité du trajet de transport de sorte que sa rotation conduise la/les saillie(s) à passer autour et passer à proximité du trajet de transport (11), en se déplaçant dans la direction de transport.

4. Système d'alignement selon la revendication 2 dans lequel l'élément rotatif a un axe de rotation s'étendant de manière généralement transversale par rapport au trajet de transport (11), ladite au moins une saillie s'étendant radialement.

5. Système d'alignement selon la revendication 1 dans lequel lesdits moyens de déplacement sont formés par une courroie sans fin, une étendue de la courroie s'étendant à proximité du trajet de transport (11).

6. Système d'alignement selon l'une quelconque des revendications précédentes dans lequel les moyens de transport sont un transporteur à bol vibrant (10).

7. Système d'alignement selon l'une quelconque des revendications précédentes ayant une pluralité de dispositifs d'alignement (20) espacés le long du trajet de transport (11).

8. Procédé pour aligner des articles (14, 16, 18) comprenant les étapes consistant à transporter des articles le long d'un trajet prédéterminé (11), les articles ayant une direction souhaitée d'alignement par rapport à la direction de transport ledit trajet étant légèrement plus grand que la largeur des articles alignés, une barrière étant à un côté du trajet (11) et l'agencement étant tel qu'un article désaligné (16) fasse saillie latéralement par rapport au trajet de transport (11) ou au côté opposé à ladite barrière ; disposer un dispositif d'alignement (20) ayant au moins une saillie (30) ; et déplacer ladite au moins une saillie (30) cycliquement de sorte qu'elle se déplace à proximité du trajet de transport (11) de manière à entrer en contact avec un article désaligné (16) et faire tourner celui-ci pour réduire le désalignement.

9. Procédé d'alignement selon la revendication 8 dans lequel l'au moins une saillie (30) est déplacée parallèlement à la direction de transport, à une vitesse supérieure à la vitesse de transport.
